# DEMANDE DE BREVET EUROPEEN

(11) **EP 2 679 289 A1**
(43) Date de publication de la demande: **01.01.2014**
(21) Numéro de dépôt: 13171628.4
(22) Date de dépôt: 12.06.2013
(51) Int. Cl.: A63F 13/02, A63F 13/06, F41H 5/08

(54) **Accessoire immersif de jeux video**

(30) Priorité: 26.06.2012 FR 1201808
(71) Demandeur: Bigben Interactive SA, 59818 Lesquin (FR)
(72) Inventeur: Allaert, Yannick, 59185 Provin (FR); Donnet, Christian, 59870 Bouvignies (FR)
(74) Mandataire: Vigand, Philippe

(57) **Abrégé**

Accessoire défensif pour la pratique interactive de jeux vidéo, représentant un objet réel de défense tenu à l'aide d'un seul membre supérieur, et comprenant :
- des moyens de préhension (10a, 10b) permettant à un utilisateur de tenir l'accessoire d'un seul membre supérieur,

caractérisé en ce que l'accessoire comprend:
- une première interface de fixation (20) d'un premier contrôleur de jeux (100),
- une deuxième interface de fixation (30, 31) d'un deuxième contrôleur de jeux (110) qui présente un afficheur,

et en ce que, lorsque l'utilisateur tient l'accessoire à l'aide d'un seul membre supérieur :
- la première interface de fixation (20) de l'accessoire est agencée pour permettre à l'utilisateur d'agir sur le premier contrôleur de jeux (100),
- la deuxième interface de fixation (30, 31) de l'accessoire est agencée pour permettre à l'utilisateur de regarder l'afficheur du deuxième contrôleur de jeux (110).

## Description

La présente invention concerne de manière générale un accessoire immersif pour la pratique de jeux vidéo, et en particulier un accessoire en forme d'une arme défensive de combat.

Il est connu dans l'art antérieur des accessoires en plastique qui représentent un bouclier pour jouer à des jeux de combat. Cependant de tels accessoires se bornent à reproduire un objet réel et au delà de cet aspect, n'améliorent pas l'interactivité lors de l'utilisation avec un jeu vidéo par exemple.

Un but de la présente invention est de répondre aux inconvénients des dispositifs de l'art antérieur mentionnés ci-dessus et en particulier, tout d'abord, de proposer un accessoire défensif qui augmente l'immersion d'un utilisateur jouant à un jeu vidéo de combat.

Pour cela un premier aspect de l'invention concerne un accessoire défensif pour la pratique interactive de jeux vidéo, représentant un objet réel de défense tenu à l'aide d'un seul membre supérieur, et comprenant :
- des moyens de préhension permettant à un utilisateur de tenir l'accessoire d'un seul membre supérieur comme le serait l'objet réel,
**caractérisé en ce que** l'accessoire comprend en outre :
- une première interface de fixation d'un premier contrôleur de jeux,
- une deuxième interface de fixation d'un deuxième contrôleur de jeux qui présente un afficheur,
et en ce que, lorsque l'utilisateur tient l'accessoire à l'aide d'un seul membre supérieur par l'intermédiaire des moyens de préhension :
- la première interface de fixation de l'accessoire est agencée pour permettre à l'utilisateur d'agir avec le même membre supérieur sur le premier contrôleur de jeux fixé à l'accessoire par la première interface de fixation,
- la deuxième interface de fixation de l'accessoire est agencée pour permettre à l'utilisateur de regarder l'afficheur du deuxième contrôleur de jeux fixé à l'accessoire par la deuxième interface de fixation

L'utilisateur tient l'accessoire selon la présente invention avec un seul membre supérieur, comme le serait l'objet réel, ce qui assure un bon réalisme. De plus, la première interface est agencée pour que l'utilisateur puisse agir sur le premier contrôleur avec le même membre supérieur que celui qui tient l'accessoire : l'utilisateur peut agir sur le jeu sans lâcher l'accessoire, et comme la deuxième interface est agencée pour offrir au regard de l'utilisateur l'écran du deuxième contrôleur, l'interactivité avec le jeu est assurée avec l'accessoire tenu comme le serait l'objet réel. L'immersion de l'utilisateur est obtenue avec cet accessoire qui permet de jouer à un jeu vidéo en étant tenu comme l'objet réel.

De manière avantageuse, l'accessoire est en forme de bouclier.

Avantageusement, les moyens de préhension comprennent une première partie agencée pour être tenue par une main de l'utilisateur. L'utilisateur peut tenir et retenir l'accessoire avec sa main.

Avantageusement, la première partie des moyens de préhension agencée pour être tenue par une main de l'utilisateur est une poignée comprenant une empreinte agencée pour recevoir le premier contrôleur de jeux et formant la première interface de fixation. Cette mise en oeuvre de la présente invention couple la partie agencée pour être tenue par la main de l'utilisateur avec la première interface de fixation, qui met à portée de la main de l'utilisateur le premier contrôleur de jeux.

De manière avantageuse, les moyens de préhension comprennent une deuxième partie agencée pour être soutenue par un avant bras de l'utilisateur. Cette mise en oeuvre offre une fermeté de maintien et une liberté de mouvements.

De manière avantageuse, l'accessoire présente une forme extérieure avec un axe de symétrie vertical, et en ce que la première partie et la deuxième partie des moyens de préhension sont identiques et symétriques par rapport à l'axe de symétrie vertical, de sorte à ce que l'accessoire soit ambidextre. Cette mise en oeuvre offre la possibilité à l'accessoire d'être utilisé aussi bien par des gauchers que par des droitiers, sans modifications.

En alternative, la première partie et la deuxième partie des moyens de préhension sont amovibles par rapport à l'accessoire et interchangeables, de sorte de sorte à ce que l'accessoire soit ambidextre. Cette mise en oeuvre offre la possibilité à l'accessoire d'être utilisé aussi bien par des gauchers que par des droitiers avec une mise en configuration rapide et aisée telle que du clipage, ou bien une fixation par baïonnette de la première et deuxième partie sur l'accessoire.

Une réalisation particulièrement intéressante consiste en ce que l'accessoire présente une face interne sur laquelle sont agencées les moyens de préhension, la première interface de fixation et la deuxième interface de fixation, et en ce que la deuxième interface de fixation comprend une empreinte en creux dans la face interne pour recevoir le deuxième contrôleur de jeux. Cette mise en oeuvre permet de protéger les deux contrôleurs de jeu, avec notamment le deuxième contrôleur implanté dans une empreinte de sorte à ce qu'il ne dépasse pas de la surface interne. On obtient également une intimité pour l'utilisateur qui peut aisément cacher à d'autres joueurs les informations affichées par le deuxième contrôleur.

Avantageusement, l'accessoire présente une face externe agencée à une distance de la face interne supérieure à la profondeur de l'empreinte en creux dans la face interne pour recevoir le deuxième contrôleur de jeux. Le deuxième contrôleur de jeux est alors agencé dans l'épaisseur de l'accessoire, qui ne présente aucune protubérance pouvant gêner l'utilisateur.

Avantageusement, l'accessoire est réalisé en matière plastique. L'accessoire est alors léger et économique à fabriquer.

Un second aspect de l'invention est un système de jeu pour la pratique interactive de jeux vidéo comprenant un accessoire selon le premier aspect de l'invention, un premier contrôleur de jeux et un deuxième contrôleur de jeux qui présente un afficheur.

Avantageusement, le système comprend en outre au moins un accessoire offensif et il comprend des capteurs de détection agencés pour détecter des interactions de l'accessoire offensif sur l'accessoire défensif selon le premier aspect de l'invention. Le réalisme de simulation est augmenté avec cette mise en oeuvre qui détecte les interactions entre l'accessoire offensif et l'accessoire défensif. On peut imaginer de détecter entre ces accessoires des chocs avec des accéléromètres, des contacts avec des interrupteurs ou des surfaces sensibles à la pression, ou une proximité avec des capteurs de proximité sans contact. Des capteurs de type radio-identification (RFID) ou communication en champ proche (NFC) permettent même une identification de l'accessoire offensif lorsqu'il passe à proximité de l'accessoire défensif.

Avantageusement, les capteurs de détection sont agencés dans l'accessoire défensif. Ce dernier est alors autonome.

Avantageusement, les capteurs de détection sont agencés dans le premier et/ou le deuxième contrôleur de jeux. On réutilise avantageusement les capteurs déjà implantés dans les contrôleurs de jeux pour offrir une nouvelle utilisation de ces derniers.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue de la face interne d'un accessoire selon la présente invention ;
- la figure 2 représente l'accessoire de la figure 1 avec deux contrôleurs de jeux vidéo fixés dessus.

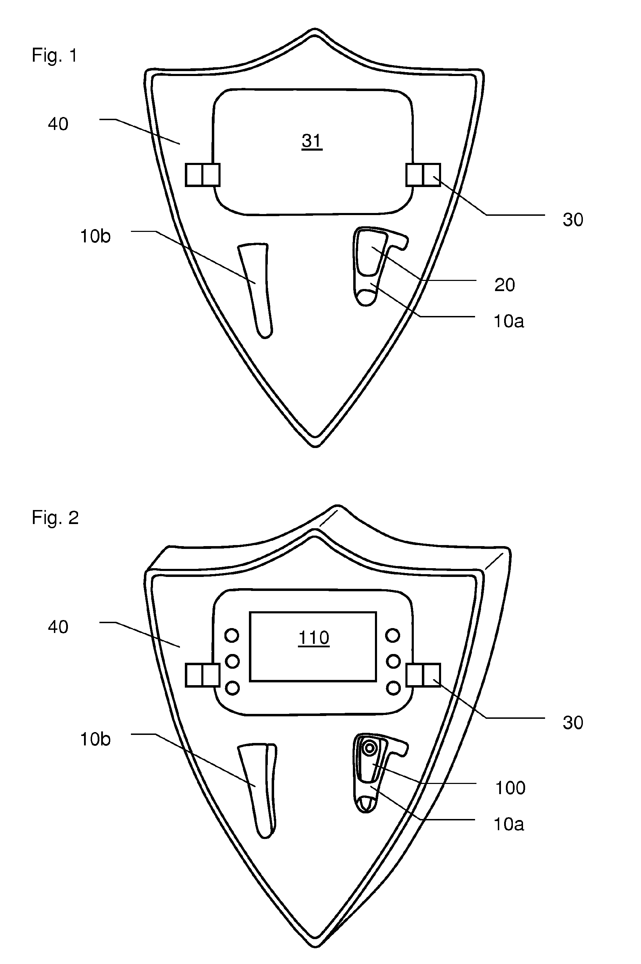

La figure 1 représente un accessoire selon la présente invention en forme de bouclier. La face interne 40 représentée comprend des moyens de préhension 10a et 10b qui permettent à un utilisateur de tenir l'accessoire de la même manière qu'un vrai bouclier : le brassard 10b permet à l'avant bras de l'utilisateur de soutenir le bouclier, tandis que la poignée 10a offre une bonne prise pour la main de l'utilisateur. La face intérieure 40 comprend également une première empreinte 20 pour un premier contrôleur de jeux. Cette première empreinte 20 est agencée sur la poignée 10a afin de permettre à l'utilisateur qui tient l'accessoire par la poignée 10a d'agir sur le premier contrôleur avec la même main. Une deuxième empreinte 31 est également agencée sur la face intérieure 40 de l'accessoire, afin d'y placer un deuxième contrôleur de jeu, qui sera maintenu en place par les taquets 30, comme cela sera expliqué au paragraphe relatif à la figure 2.

La figure 2 représente l'accessoire de la figure 1 avec deux contrôleurs de jeux vidéo 10 et 110 fixés dessus. Le premier contrôleur de jeux 100 est inséré dans l'empreinte de la poignée 10a, de sorte que l'utilisateur puisse agir dessus avec son pouce par exemple, tout en tenant la poignée 10a avec la même main et en soutenant l'accessoire avec son avant bras par l'intermédiaire du brassard 10b. Le deuxième contrôleur 110 est quant à lui inséré dans l'empreinte 31 et maintenu en place par les taquets 30. L'empreinte 30 dans la face intérieure 40 présente une profondeur sensiblement égale à l'épaisseur du deuxième contrôleur de jeux 110, de sorte que ce dernier ne soit pas en protubérance par rapport à la face intérieure 40, pour ne pas gêner l'utilisateur. Tout en tenant l'accessoire avec son bras (par l'intermédiaire de son avant bras et de sa main), l'utilisateur peut agir sur le premier contrôleur 100 et visualiser les informations affichées sur le deuxième contrôleur 110, ce qui procure une bonne immersion car l'accessoire est tenu et utilisé comme le serait un vrai bouclier et laisse la deuxième main de l'utilisateur libre pour tenir une épée, ou pour agir sur le deuxième contrôleur 110 par exemple. Enfin, comme le montre la figure 2, l'épaisseur de l'accessoire est telle que la face extérieure de ce dernier est agencée à une distance de la face intérieure 40 qui est supérieure à la profondeur de l'empreinte 31 pour ne pas faire de protubérance sur la face extérieure.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un contrôleur de jeux avec un afficheur, mais on peut envisager d'utiliser une tablette avec un écran d'affichage, ou un téléphone avec un écran d'affichage, tactile ou non.

## Revendications

1. Accessoire défensif pour la pratique interactive de jeux vidéo, représentant un objet réel de défense tenu à l'aide d'un seul membre supérieur, et comprenant :
- des moyens de préhension (10a, 10b) permettant à un utilisateur de tenir l'accessoire d'un seul membre supérieur comme le serait l'objet réel,
**caractérisé en ce que** l'accessoire comprend en outre :
- une première interface de fixation (20) d'un premier contrôleur de jeux (100),
- une deuxième interface de fixation (30, 31) d'un deuxième contrôleur de jeux (110) qui présente un afficheur,
et **en ce que**, lorsque l'utilisateur tient l'accessoire à l'aide d'un seul membre supérieur par l'intermédiaire des moyens de préhension (10a, 10b) :
- la première interface de fixation (20) de l'accessoire est agencée pour permettre à l'utilisateur d'agir avec le même membre supérieur sur le premier contrôleur de jeux (100) fixé à l'accessoire par la première interface de fixation (20),
- la deuxième interface de fixation (30, 31) de l'accessoire est agencée pour permettre à l'utilisateur de regarder l'afficheur du deuxième contrôleur de jeux (110) fixé à l'accessoire par la deuxième interface de fixation (30, 31).

2. Accessoire selon la revendication 1, **caractérisé en ce qu'il** est en forme de bouclier.

3. Accessoire selon l'une des revendications 1 ou 2, **caractérisé en ce que** les moyens de préhension (10a, 10b) comprennent une première partie (10a) agencée pour être tenue par une main de l'utilisateur.

4. Accessoire selon la revendication 3, **caractérisé en ce que** la première partie (10a) des moyens de préhension (10a, 10b) agencée pour être tenue par une main de l'utilisateur est une poignée comprenant une empreinte (20) agencée pour recevoir le premier contrôleur de jeux (100) et formant la première interface de fixation (20).

5. Accessoire selon l'une des revendications 1 à 4, **caractérisé en ce que** les moyens de préhension (10a, 10b) comprennent une deuxième partie (10b) agencée pour être soutenue par un avant bras de l'utilisateur.

6. Accessoire selon la revendication 5 dans sa dépendance à la revendication 3 **caractérisé en ce que** l'accessoire présente une forme extérieure avec un axe de symétrie vertical, et **en ce que** la première partie (10a) et la deuxième partie (10b) des moyens de préhension (10a, 10b) sont identiques et symétriques par rapport à l'axe de symétrie vertical, de sorte à ce que l'accessoire soit ambidextre.

7. Accessoire selon la revendication 5 dans sa dépendance à la revendication 3 **caractérisé en ce que** la première partie (10a) et la deuxième partie (10b) des moyens de préhension (10a, 10b) sont amovibles par rapport à l'accessoire et interchangeables de sorte de sorte à ce que l'accessoire soit ambidextre.

8. Accessoire selon l'une des revendications 1 à 7, **caractérisé en ce qu'il** présente une face interne (40) sur laquelle sont agencées les moyens de préhension (10a, 10b), la première interface de fixation (20) et la deuxième interface de fixation (30, 31), et **en ce que** la deuxième interface de fixation (30, 31) comprend une empreinte (31) en creux dans la face interne (40) pour recevoir le deuxième contrôleur de jeux (110).

9. Accessoire selon la revendication 8, **caractérisé en ce qu'il** présente une face externe de défense agencée à une distance de la face interne (40) supérieure à la profondeur de l'empreinte (31) en creux dans la face interne (40) pour recevoir le deuxième contrôleur de jeux (110).

10. Système de jeu pour la pratique interactive de jeux vidéo comprenant un accessoire défensif selon l'une des revendications 1 à 9, un premier contrôleur de jeux (100) et un deuxième contrôleur de jeux (110) qui présente un afficheur.

11. Système selon la revendication 10 comprenant en outre au moins un accessoire offensif et **caractérisé en ce qu'il** comprend des capteurs de détection agencés pour détecter des interactions de l'accessoire offensif sur l'accessoire défensif selon l'une des revendications 1 à 9.

12. Système selon la revendication 11, **caractérisé en ce que** les capteurs de détection sont agencés dans l'accessoire défensif selon l'une des revendications 1 à 9.

13. Système selon la revendication 11, **caractérisé en ce que** les capteurs de détection sont agencés dans le premier et/ou le deuxième contrôleur de jeux.
